# EUROPÄISCHE PATENTANMELDUNG

(11) **EP 2 687 493 A2**
(43) Veröffentlichungstag der Anmeldung: **22.01.2014**
(21) Anmeldenummer: 13175748.6
(22) Anmeldetag: 09.07.2013
(51) Int. Cl.: C03C 23/00, F24C 15/10

(54) **Verfahren zur Herstellung eines Hausgeräteelements und Hausgeräteelement**

(30) Priorität: 20.07.2012 ES 201231163
(71) Anmelder: BSH Bosch und Siemens Hausgeräte GmbH, 81739 München (DE)
(72) Erfinder: Alaman Aguilar, Jorge, 50008 Zaragoza (ES); Artal Lahoz, Maria Carmen, 50007 Zaragoza (ES); Bunuel Magdalena, Miguel Angel, 50017 Zaragoza (ES); Escartin Barduzal, Andres, 50019 Zaragoza (ES); Ester Sola, Francisco Javier, 50001 Zaragoza (ES); Perez Cabeza, Pilar, 50008 Zaragoza (ES); Peña Torre, José Ignacio, 50004 Zaragoza (ES); Planas Layunta, Fernando, 50009 Zaragoza (ES); Sola Martinez, Daniel, 50009 Zaragoza (ES)

(57) **Zusammenfassung**

Die Erfindung geht aus von einem Verfahren zur Herstellung eines Hausgeräteelements (10a; 10b), insbesondere einer Kochfeldplatte (12a; 12b).

Um ein Hausgeräteelement mit einer vorteilhaft erweiterten Funktionalität bereitzustellen, wird vorgeschlagen, dass in einem Verfahrensschritt wenigstens eine optische Markierung (14a; 14b) eingebracht wird, welche wenigstens teilweise zumindest im Wesentlichen lediglich unter einer Sonderbedingung sichtbar ist.

## Beschreibung

Die Erfindung geht aus von einem Verfahren zur Herstellung eines Hausgeräteelements nach dem Oberbegriff des Anspruchs 1.

Aus der DE 20 2006 004 064 U1 ist eine Glaskeramikscheibe bekannt, in der mittels eines gepulsten Lasers, welcher Licht mit einer Wellenlänge von 532 nm oder 1064 nm emittiert, Schriftzeichen und/oder eine Ornamentik eingebracht sind. Eine Fokussierung des Lichts im Innern der Glaskeramikscheibe führt zu einer Bildung von Reflexionsflächen innerhalb der Glaskeramikscheibe, wodurch die Schriftzeichen und/oder die Ornamentik für einen Betrachter sichtbar werden.

Die Aufgabe der Erfindung besteht insbesondere darin, ein Hausgeräteelement mit einer vorteilhaft erweiterten optischen Funktionalität bereitzustellen. Die Aufgabe wird erfindungsgemäß durch die kennzeichnenden Merkmale des Patentanspruchs 1 gelöst, während vorteilhafte Ausgestaltungen und Weiterbildungen der Erfindung den Unteransprüchen entnommen werden können.

Die Erfindung geht aus von einem Verfahren zur Herstellung eines Hausgeräteelements, insbesondere einer Kochfeldplatte.

Es wird vorgeschlagen, dass in einem Verfahrensschritt wenigstens eine optische Markierung eingebracht wird, welche wenigstens teilweise zumindest im Wesentlichen lediglich unter einer Sonderbedingung sichtbar ist. Unter einem "Hausgeräteelement" soll insbesondere ein Bauelement eines Hausgeräts verstanden werden. Vorzugsweise besteht das Hausgeräteelement zumindest teilweise und besonders vorteilhaft zu einem Großteil, insbesondere mit einem Massenanteil von wenigstens 60 %, insbesondere von mindestens 70 %, vorzugsweise von zumindest 80 % und besonders vorteilhaft von wenigstens 90 %, aus einer Glaskeramik. Insbesondere kann das Hausgeräteelement in einem sichtbaren Wellenlängenbereich zumindest teilweise optisch transparent sein. Unter einer "Kochfeld-platte" soll in diesem Zusammenhang insbesondere ein in einer Einbaulage horizontal angeordnetes Plattenelement verstanden werden, welches insbesondere zu einem Aufstellen von Gargeschirr zu Garzwecken vorgesehen ist. Unter "vorgesehen" soll hier und im Folgenden insbesondere speziell ausgelegt und/oder ausgestattet und/oder programmiert verstanden werden. Unter einer "Markierung" soll insbesondere eine vorzugsweise permanente Struktur in einem Bereich des Hausgeräteelements, welcher sich insbesondere auch über eine gesamte Außenfläche des Hausgeräteelements erstrecken kann, verstanden werden, welche insbesondere eine Dekoration, insbesondere eine linien- und/oder punktartige Dekoration, und/oder ein Markenlogo und/oder ein Markenname sein kann. Ferner kann die Markierung als eine Bauteilkennzeichnung ausgebildet sein, welche dazu vorgesehen ist, das Hausgeräteelement zu identifizieren und/oder nachzuverfolgen, vorzugsweise zumindest teilautomatisiert und besonders vorteilhaft vollautomatisiert, insbesondere während eines Transports und/oder in einem Lager und/oder vorzugsweise in einer Fertigungskette und insbesondere zu einer Fehlerevaluierung und/oder zu einer Fertigungs- und/oder Lagerungs- und/oder Transportoptimierung und/oder zu einer Qualitätssicherung. Die Bauteilkennzeichnung umfasst insbesondere wenigstens eine Zahl, insbesondere eine Zahlenfolge, und/oder zumindest einen Strichcode und/oder wenigstens einen 2D-Code, vorzugsweise einen DataMatrix-Code, und/oder zumindest einen alphanumerischen Bezeichner.

Darunter, dass die Markierung wenigstens teilweise "zumindest im Wesentlichen lediglich unter einer Sonderbedingung sichtbar ist", soll insbesondere verstanden werden, dass wenigstens ein Teil der Markierung und vorzugsweise die gesamte Markierung unter einer von einer Standardbedingung abweichenden Bedingung, insbesondere bei einem von einem Hausgerät demontierten Hausgeräteelement, sichtbar ist und insbesondere unter der Standardbedingung zumindest weitgehend unsichtbar ist. Unter einer "Standardbedingung" soll in diesem Zusammenhang insbesondere eine zumindest weitgehend zu einer Normalen einer Haupterstreckungsebene des Teils der Markierung parallele Richtung einer Beleuchtung und/oder Betrachtung des Teils der Markierung verstanden werden. Unter einer "Haupterstreckungsebene" eines Objekts soll insbesondere eine Ebene verstanden werden, welche parallel zu einer größten Seitenfläche eines kleinsten geometrischen Quaders ist, welcher das Objekt gerade noch vollständig umschließt, und insbesondere durch den Mittelpunkt des Quaders verläuft. Unter einer "zumindest weitgehend zu einer Normalen einer Haupterstreckungsrichtung parallelen Richtung" soll insbesondere eine Richtung verstanden werden, welche mit der Normalen einen Winkel von höchstens 20°, insbesondere von maximal 15°, vorzugsweise von höchstens 10° und besonders vorteilhaft von maximal 5° einschließt. Darunter, dass wenigstens ein Teil der Markierung und vorzugsweise die gesamte Markierung unter der Standardbedingung "zumindest weitgehend unsichtbar" ist, soll insbesondere verstanden werden, dass der Teil der Markierung durch ein gesundes Auge eines Normalsichtigen unter der Standardbedingung von einer Umgebung des Teils der Markierung zumindest weitgehend ununterscheidbar ist, insbesondere da unter der Standardbedingung eine relative Abweichung einer das Auge erreichenden Intensität eines von einem beliebigen Punkt des Teils der Markierung gestreuten und/oder reflektierten und/oder emittierten Lichts und einer das Auge erreichenden Intensität eines von einem beliebigen Punkt der Umgebung des Teils der Markierung gestreuten und/oder reflektierten und/oder emittierten Lichts für jede Lichtwellenlänge zwischen 380 nm und 780 nm höchstens 10 %, insbesondere maximal 5 %, vorzugsweise höchstens 1 % und besonders vorteilhaft maximal 0,1 % beträgt. Vorzugsweise ist die Sonderbedingung durch bestimmte Lichtverhältnisse, insbesondere durch eine Anzahl an Lichtquellen und/oder durch deren Anordnung relativ zueinander und/oder relativ zum Hausgeräteelement und/oder durch deren relative Lichtstärke und/oder durch ein Lichtspektrum wenigstens einer Lichtquelle, und/oder durch einen bestimmten Blickwinkel auf das Hausgeräteelement definiert. Vorzugsweise ist die Markierung am Hausgeräteelement für den Fall, dass es sich bei der Markierung um eine Bauteilkennzeichnung handelt, derart angeordnet, dass die Sonderbedingung in einer Einbaulage des Hausgeräteelements und vorzugsweise in einem montierten Zustand des Hausgeräteelements im Hausgerät unerfüllbar ist. Vorzugsweise ist die Markierung am Hausgeräteelement für den Fall, dass es sich bei der Markierung um eine Dekoration und/oder ein Markenlogo und/oder einen Markenname handelt, derart angeordnet, dass die Sonderbedingung in einer Einbaulage des Hausgeräteelements und vorzugsweise in einem montierten Zustand des Hausgeräteelements im Hausgerät bei einer bestimmten Betrachtung des Hausgeräts und/oder durch eine bestimmte Beleuchtung des Hausgeräts, insbesondere auch durch eine interne Beleuchtung des Hausgeräts, vorzugsweise während zumindest eines Betriebszustands des Hausgeräts, erfüllt ist.

Durch eine solche Ausgestaltung kann ein Hausgeräteelement mit einer vorteilhaft erweiterten optischen Funktionalität bereitgestellt werden. Insbesondere kann eine einen optischen Gesamteindruck des Hausgeräteelements nicht herabsetzende Bauteilkennzeichnung geschaffen werden, insbesondere bei einem im sichtbaren Wellenlängenbereich zumindest teilweise transparenten Hausgeräteelement. Insbesondere kann eine Identifizierung und/oder Nachverfolgung des Hausgeräteelements während eines Transports und/oder in einem Lager und/oder in einer Fertigungskette vorteilhaft optimiert werden, insbesondere bei einem zumindest teilweise transparenten Hausgeräteelement. Ferner können vorteilhaft weitergehende Designmöglichkeiten eröffnet werden.

In einer bevorzugten Ausgestaltung der Erfindung wird vorgeschlagen, dass die Markierung an einer äußeren Oberfläche eines Rohelements des Hausgeräteelements erzeugt wird. Unter einer "äußeren Oberfläche" eines Bauelements soll insbesondere eine anfassbare Oberfläche des Bauelements verstanden werden, insbesondere in einem von dem Hausgerät demontierten Zustand. Unter einem "Rohelement" des Hausgeräteelements soll insbesondere ein Bauelement verstanden werden, aus welchem durch das Verfahren, insbesondere durch den Verfahrensschritt, das Hausgeräteelement hervorgeht. Hierdurch kann eine Zuverlässigkeit und Reproduzierbarkeit des Verfahrens sichergestellt werden. Ferner können besonders vorteilhafte optische Effekte erzielt werden. Insbesondere kann eine Sichtbarkeit bei der Sonderbedingung verbessert werden.

In einer besonders bevorzugten Ausgestaltung der Erfindung wird vorgeschlagen, dass die Markierung mittels einer Laserbehandlung eingebracht wird. Unter einer "Laserbehandlung" soll insbesondere eine Bestrahlung wenigstens eines Bereichs des Hausgeräteelements verstanden werden, wobei durch die Bestrahlung insbesondere eine Strukturänderung des Bereichs induziert wird, insbesondere durch eine lokale Temperaturerhöhung. Hierdurch kann ein vorteilhaft schnelles, präzises, kostengünstiges und reproduzierbares Einbringen der Markierung ermöglicht werden. Insbesondere ist eine berührungslose und damit vorzugsweise beschädigungs- und/oder verschmutzungs- und/oder kontaminationsfreie Markierung des Hausgeräteelements möglich. Ferner ist eine Anwendung des Verfahrens für fast jedes Material denkbar, so dass insbesondere eine einzige Laseranordnung zu einem Einbringen von Markierungen in unterschiedliche Hausgeräteelemente verwendet werden kann. Vorzugsweise wird ein Festkörperlaser, insbesondere ein diodengepumpter Festkörperlaser und besonders vorteilhaft ein Nd:YAG-Laser verwendet. Hierdurch kann Bauraum eingespart werden und es kann eine höhere Betriebszuverlässigkeit erreicht werden. Des Weiteren können eine optische Pumpeffizienz und eine Strahlqualität vorteilhaft gesteigert werden. Wenn der Laser eine mittlere Leistung von wenigstens 5 W, insbesondere von mindestens 7,5 W und besonders vorteilhaft von zumindest 10 W aufweist, kann eine vorteilhaft hohe Bearbeitungseffizienz erzielt werden kann. Vorzugsweise wird, insbesondere bei einem Hausgeräteelement, welches zumindest zu einem Großteil aus einer Glaskeramik besteht, die Laserbehandlung mit einer Laser-Wellenlänge zwischen 355 nm und 3000 nm, insbesondere im Nahinfrarotwellenbereich, vorzugsweise zwischen 780 nm und 1400 nm und besonders vorteilhaft von 1064 nm durchgeführt. Vorzugsweise ist das Hausgeräteelement für wenigstens eine von dem Laser emittierte Wellenlänge zumindest teilweise transparent. Hierdurch kann eine besonders vorteilhafte Bearbeitung des Hausgeräteelements erreicht werden, da eine räumliche Verteilung einer Energiedeposition durch eine entsprechende Fokussierung eines Laserlichts exakt gesteuert werden kann.

Vorteilhaft wird Laserlicht mit einer Bestrahlungsstärke von zumindest 1 GW/cm², insbesondere von wenigstens 10 GW/cm², vorzugsweise von mindestens 20 GW/cm² und besonders vorteilhaft von zumindest 30 GW/cm² fokussiert. Unter einer "Bestrahlungsstärke" soll insbesondere ein durch den Laser pro Zeit- und Flächeneinheit eingestrahlter Energiebetrag verstanden werden. Hierdurch kann eine ausreichend hohe Energiedeposition zu einer Induzierung der Strukturänderung des bestrahlten Bereichs des Hausgeräteelements erreicht werden. Vorzugsweise erfolgt eine Fokussierung an der äußeren Oberfläche des Hausgeräteelements. Hierdurch kann insbesondere im Vergleich zu einer Fokussierung des Laserlichts in einem Innern des Hausgeräteelements ein allzu starker, durch eine örtliche Temperaturerhöhung bedingter Druckanstieg und damit einhergehend eine dauerhaft sichtbare Beschädigung und/oder Markierung des Hausgeräteelements vorteilhaft vermieden werden. Wenn die Bestrahlungsstärke insbesondere höchstens 300 GW/cm², vorzugsweise maximal 200 GW/cm² und besonders vorteilhaft maximal 100 GW/cm² beträgt, kann eine dauerhaft sichtbare Beschädigung und/oder Markierung des Hausgeräteelements besonders vorteilhaft vermieden werden.

Ferner wird vorgeschlagen, dass ein gepulster Laser mit einer Pulsdauer von höchstens 50 ns, insbesondere von höchstens 40 ns, vorzugsweise von maximal 30 ns und besonders vorteilhaft von höchstens 25 ns verwendet wird. Unter einem "gepulsten Laser" soll in diesem Zusammenhang insbesondere ein Laser verstanden werden, welcher eine elektromagnetische Energie in zeitlich voneinander getrennten Lichtimpulsen mit einer bestimmten Pulsenergie und einer bestimmten Pulsdauer emittiert. Unter einer "Pulsenergie" soll insbesondere eine gesamte während eines Pulses emittierte elektromagnetische Energie verstanden werden. Sie beträgt insbesondere zumindest 0,25 mJ, vorzugsweise wenigstens 0,5 mJ und besonders vorteilhaft mindestens 0,75 mJ. Unter einer "Pulsdauer" soll insbesondere eine zeitliche Dauer eines Lichtimpulses verstanden werden. Bei einem gepulsten Laser ist die Bestrahlungsstärke insbesondere gegeben durch die Pulsenergie dividiert durch ein Produkt aus der Pulsdauer und einer Fokusfläche. Unter einer "Fokusfläche" soll insbesondere eine minimale Querschnittsfläche eines insbesondere durch eine Laseroptik fokussierten Laserlichtbündels verstanden werden. Insbesondere wird der Laserstrahl mit einer Fluenz von wenigstens 100 J/cm², vorzugsweise von mindestens 300 J/cm² und besonders vorteilhaft von zumindest 500 J/cm² fokussiert. Die "Fluenz" ist insbesondere gegeben durch die Pulsenergie dividiert durch die Fokusfläche. Hierdurch kann vorteilhaft eine hohe Bestrahlungsstärke erzielt werden. Ferner kann eine unvorteilhafte Abkühlung von bestrahltem Material durch Wärmeleitung während eines Lichtimpulses zumindest weitgehend verhindert werden.

Wenn Laserlicht auf einen Fokusdurchmesser von höchstens 30 µm, insbesondere von maximal 25 µm, vorzugsweise von höchstens 20 µm und besonders vorteilhaft von maximal 15 µm fokussiert wird, kann besonders vorteilhaft eine hohe Bestrahlungsstärke erzielt werden. Unter einem "Fokusdurchmesser" soll insbesondere ein Durchmesser eines größten Kreises verstanden werden, welcher parallel zur Fokusfläche angeordnet gerade noch in die Fokusfläche des Laserstrahls passt.

In einer weiteren Ausgestaltung der Erfindung wird vorgeschlagen, dass ein gepulster Laser mit einer Pulswiederholfrequenz zwischen 0,5 kHz und 20 kHz, insbesondere zwischen 1 kHz und 10 kHz, vorzugsweise zwischen 1 kHz und 7,5 kHz, vorteilhaft zwischen 1 kHz und 5 kHz und besonders vorteilhaft zwischen 2 kHz und 5 kHz verwendet wird. Unter einer "Pulswiederholfrequenz" soll insbesondere ein Kehrwert einer Zeitdauer zwischen Startzeitpunkten zweier aufeinander folgender Lichtimpulse verstanden werden. Hierdurch kann eine hohe Bestrahlungsstärke insbesondere bei gleichzeitig hoher Verfügbarkeit des Lasers erreicht werden.

Wenn ein Laserfokus relativ zu einem Rohelement des Hausgeräteelements mit einer Geschwindigkeit zwischen 100 mm/s und 400 mm/s, insbesondere zwischen 150 mm/s und 350 mm/s, vorzugsweise zwischen 200 mm/s und 300 mm/s und besonders vorteilhaft zwischen 225 mm/s und 275 mm/s bewegt wird, kann ein vorteilhafter Mittelpunktsabstand zweier benachbarter Laserbearbeitungspunkte erreicht werden, wobei sich der Mittelpunktsabstand zweier benachbarter und zeitlich nacheinander eingebrachter Laserbearbeitungspunkte insbesondere aus der Geschwindigkeit dividiert durch die Pulswiederholfrequenz berechnet. Unter einem "Laserbearbeitungspunkt" soll insbesondere ein räumlicher Bereich des Hausgeräteelements verstanden werden, welcher einer Laserbestrahlung unterzogen wurde, wodurch in dem Bereich insbesondere eine Strukturänderung induziert wurde. Vorzugsweise beträgt ein Mittelpunktsabstand zweier benachbarter und zeitlich nacheinander eingebrachter Laserbearbeitungspunkte zwischen 50 µ und 200 µm, insbesondere zwischen 75 µm und 175 µm und besonders vorteilhaft zwischen 100 µm und 150 µm. Vorteilhaft wird zwischen zwei benachbarten Laserbearbeitungspunkten ein Mittelpunktsabstand von wenigstens 50 µm, insbesondere von zumindest 75 µm und besonders vorteilhaft von mindestens 100 µm eingehalten, wodurch eine Rissbildung im Hausgeräteelement wirkungsvoll vermieden werden. Vorzugsweise weist der Laserbearbeitungspunkt einen Durchmesser von weniger als 100 µm, insbesondere von weniger als 50 µm und besonders bevorzugt von weniger als 20 µm auf. Hierdurch kann eine vorteilhaft geringe Sichtbarkeit einzelner Laserbearbeitungspunkte bei einer Standardbedingung erreicht werden. Insbesondere ist denkbar, dass das Hausgeräteelement bewegt und der Laserfokus ortsfest gehalten werden. Vorzugsweise wird jedoch der Laserfokus bewegt und das Hausgeräteelement ortsfest gehalten, wodurch das Verfahren vorteilhaft vereinfacht werden kann.

Vorteilhaft wird ein Laserfokus relativ zu einem Rohelement des Hausgeräteelements in zueinander parallelen Bearbeitungslinien mit einem Linienabstand benachbarter Bearbeitungslinien zwischen 50 µm und 200 µm, insbesondere zwischen 75 µm und 175 µm, vorzugsweise zwischen 100 µm und 150 µm und besonders vorteilhaft zwischen 100 µm und 125 µm bewegt. Unter einer "Bearbeitungslinie" soll in diesem Zusammenhang insbesondere eine vorzugsweise gerade Verbindungslinie einer Teilmenge von zeitlich unmittelbar nacheinander eingebrachten Laserbearbeitungspunkten verstanden werden. Auch hier kann insbesondere das Hausgeräteelement bewegt und der Laserfokus ortsfest gehalten werden. Vorzugsweise wird jedoch ebenfalls der Laserfokus bewegt und das Hausgeräteelement ortsfest gehalten. Hierdurch kann ein ausreichend hoher Abstand zwischen benachbarten Laserbearbeitungspunkten sichergestellt werden, wodurch eine Beschädigung des Hausgeräteelements wirkungsvoll vermieden werden kann. Ferner kann eine vorteilhafte und insbesondere flächige Markierung geschaffen werden.

Ferner wird ein Hausgeräteelement vorgeschlagen, welches insbesondere durch ein erfindungsgemäßes Verfahren hergestellt ist und welches wenigstens eine Markierung umfasst, die wenigstens teilweise zumindest im Wesentlichen lediglich unter einer Sonderbedingung sichtbar ist. Das Hausgeräteelement kann insbesondere als eine Kochfeldplatte eines Kochfelds ausgebildet sein. Vorzugsweise ist die Markierung an einer äußeren Oberfläche des Hausgeräteelements angeordnet. Hierdurch kann ein Hausgeräteelement mit einer vorteilhaft erweiterten optischen Funktionalität bereitgestellt werden.

Des Weiteren wird ein Hausgerät, insbesondere ein Kochfeld, mit einem entsprechenden Hausgeräteelement vorgeschlagen. Insbesondere kann das Hausgerät und/oder ein weiteres Hausgerät und/oder ein Küchenmöbel eine Beleuchtungseinheit umfassen, welche in zumindest einem Betriebszustand die Markierung derart beleuchtet, dass die Sonderbedingung erfüllt ist. Hierdurch kann ein Hausgerät mit einer vorteilhaft erweiterten optischen Funktionalität bereitgestellt werden. Insbesondere kann ein Kochfeld bereitgestellt werden, dessen Kochfeldplatte wenigstens eine Markierung aufweist, die in zumindest einem Betriebszustand beleuchtet ist und in einem deaktivierten Zustand des Kochfelds zumindest weitgehend unsichtbar ist.

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Hausgerät mit einem Hausgeräteelement, welches durch ein erfindungsgemäßes Verfahren hergestellt ist, in einer Draufsicht,
- Fig. 2: das Hausgeräteelement in einer schematischen und nicht maßstabsgetreuen Schnittdarstellung entlang einer Linie II-II in Fig. 1,
- Fig. 3: einen Teil des Hausgeräteelements in einer schematischen und nicht maßstabsgetreuen Draufsicht,
- Fig. 4: eine schematische und nicht maßstabsgetreue Darstellung eines Verfahrensschritts des Verfahrens zur Herstellung des Hausgeräteelements,
- Fig. 5: ein weiteres Hausgerät mit einem alternativen Hausgeräteelement in einer Draufsicht und
- Fig. 6: das Hausgeräteelement aus Fig. 5 in einer schematischen und nicht maßstabsgetreuen Schnittdarstellung entlang einer Linie VI-VI in Fig. 5.

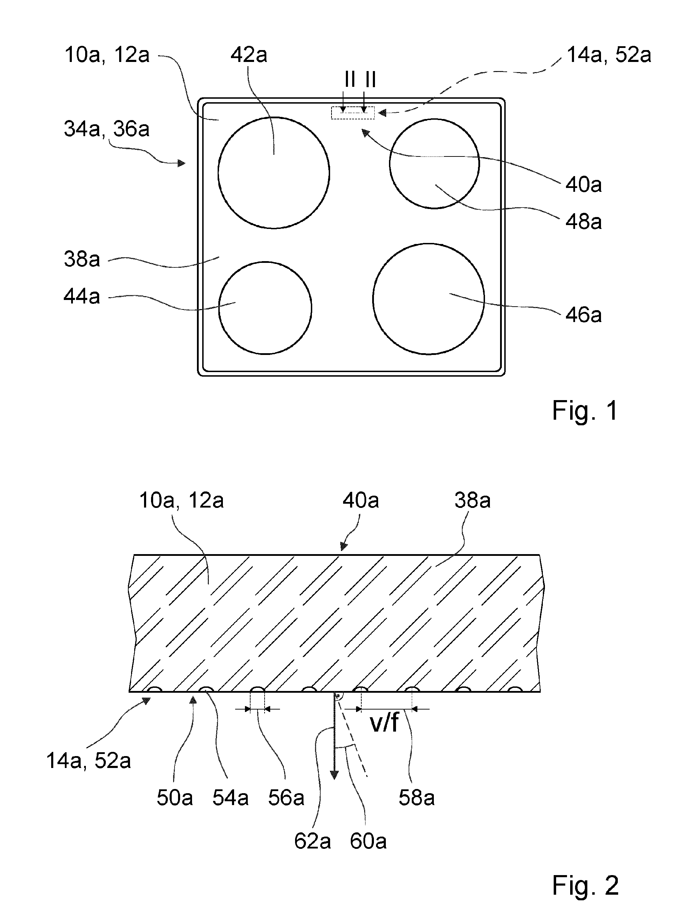

Figur 1 zeigt ein als Kochfeld 36a ausgebildetes Hausgerät 34a mit einem Hausgeräteelement 10a welches durch ein erfindungsgemäßes Verfahren hergestellt ist, in einer Draufsicht. Das Hausgeräteelement 10a ist als eine Kochfeldplatte 12a ausgebildet. Das Hausgeräteelement 10a weist einen Grundkörper 38a auf. Der Grundkörper 38a ist plattenartig ausgebildet. Der Grundkörper 38a besteht aus einer Glaskeramik. Die Glaskeramik ist unter dem Handelsnamen "Ceran Suprema" erhältlich. Der Grundkörper 38a ist weitgehend opak und weist lediglich im roten Wellenlängenbereich eine teilweise Transparenz auf. Auf einer Oberseite 40a des Grundkörpers 38a sind in bekannter Weise Heizzonen 42a, 44a, 46a, 48a markiert. Jeder der Heizzonen 42a, 44a, 46a, 48a ist unterhalb der Kochfeldplatte 12a jeweils eine Heizeinheit zugeordnet (nicht dargestellt), welche vorzugsweise jeweils zumindest ein Induktionsheizelement aufweisen. Ferner können auf der Oberseite 40a des Grundkörpers 38a berührungsempfindliche Oberflächen einer Bedieneinheit markiert sein (nicht dargestellt). Das Hausgeräteelement 10a weist eine Markierung 14a auf, die zumindest im Wesentlichen lediglich unter einer Sonderbedingung sichtbar ist. Die Markierung 14a ist an einer der Oberseite 40a des Grundkörpers 38a des Hausgeräteelements 10a gegenüberliegenden Unterseite 50a des Grundkörpers 38a eingebracht. Bei der Markierung 14a handelt es sich um eine Bauteilkennzeichnung 52a, welche dazu vorgesehen ist, das Hausgeräteelement 10a zu identifizieren. Die Bauteilkennzeichnung 52a ist als eine maschinenlesbare Kodierung ausgebildet und dient insbesondere während einer Fertigung des Hausgeräts 34a einer Nachverfolgung des Hausgeräteelements 10a, insbesondere zu Zwecken einer Qualitätssicherung.

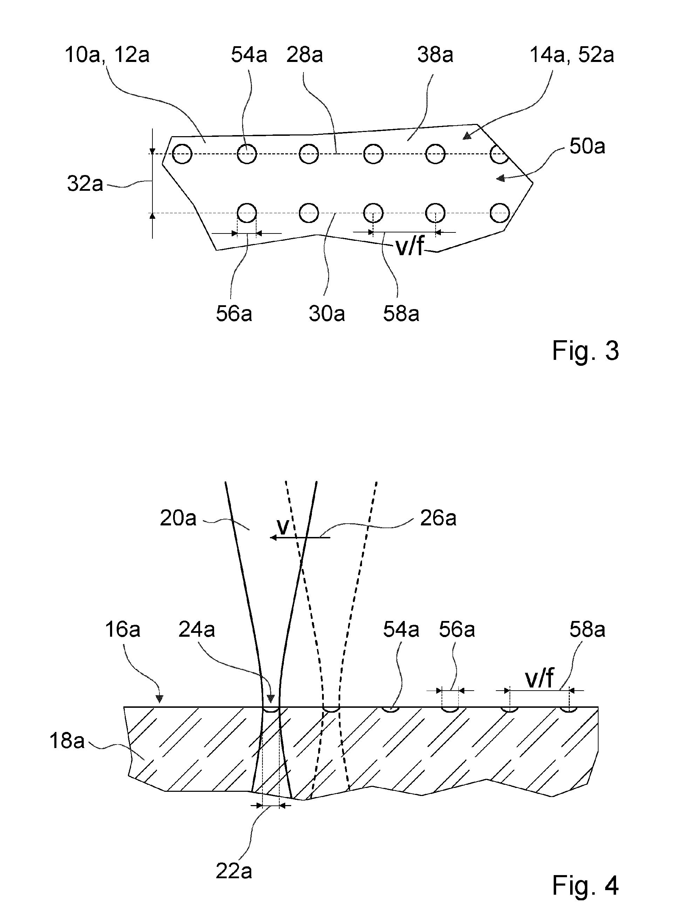

Figur 2 zeigt das Hausgeräteelement 10a in einer schematischen und nicht maßstabsgetreuen Schnittdarstellung entlang einer Linie II-II in Figur 1. Figur 3 zeigt einen Teil des Hausgeräteelements 10a in einer vergrößerten und schematischen Draufsicht auf die Unterseite 50a. Die Markierung 14a besteht aus einer Vielzahl in die Unterseite 50a des Grundkörpers 38a eingebrachter Laserbearbeitungspunkte 54a, von denen in den Figuren 2 und 3 jeweils lediglich einer bezeichnet ist. Die Laserbearbeitungspunkte 54a sind in den Figuren zu einer Verbesserung ihrer Sichtbarkeit stark vergrößert dargestellt. Ein Durchmesser 56a der Laserbearbeitungspunkte 54a beträgt jeweils ungefähr 13 µm. Die Laserbearbeitungspunkte 54a sind in zueinander parallelen Bearbeitungslinien 28a, 30a angeordnet, von denen in Figur 3 lediglich zwei beispielhaft gezeigt sind. Ein Linienabstand 32 zweier benachbarter Bearbeitungslinien 28a, 30a beträgt jeweils ungefähr 100 µm. Ein Mittelpunktsabstand 58a unmittelbar benachbarter Laserbearbeitungspunkte 54a einer Bearbeitungslinie 28a, 30a beträgt jeweils ungefähr 125 µm.

Bei der Sonderbedingung, unter welcher die Markierung 14a sichtbar ist, handelt es sich um einen bestimmten Betrachtungswinkel 60a. Die Markierung 14a ist lediglich dann sichtbar, wenn, eine ausreichende Beleuchtung vorausgesetzt, die Markierung 14a von der Unterseite 50a her betrachtet wird und ein Betrachtungswinkel 60a relativ zu einem Normalenvektor 62a der Unterseite 50a zwischen 20° und 60° beträgt (vgl. Figur 2). Diese Sonderbedingung wird bei der Fertigung des Hausgeräts 34a von einem automatischen Lesegerät einer Fertigungsstrecke eingehalten, so dass in der Fertigungsstrecke eine Identifizierung des Hausgeräteelements 10a erfolgen kann. Andererseits ist die Sonderbedingung für das Hausgeräteelement 10a in einem im Hausgerät 34a montierten Zustand unerfüllbar, da in diesem Fall eine Betrachtung lediglich von der Oberseite 40a her möglich ist, so dass der benötigte Betrachtungswinkel 60a unerreichbar ist. Somit ist die Markierung 14a an dem fertig verbauten Hausgeräteelement 10a unsichtbar, obwohl der Grundkörper 38a des Hausgeräteelements 10a eine gewisse Transparenz aufweist.

Figur 4 zeigt eine nicht maßstabsgetreue und schematische Darstellung eines Verfahrensschritts des Verfahrens zur Herstellung des Hausgeräteelements 10a. Bei dem Verfahrensschritt wird die wenigstens teilweise zumindest im Wesentlichen lediglich unter einer Sonderbedingung sichtbare optische Markierung 14a eingebracht. Bei dem Verfahrensschritt handelt es sich um eine Laserbehandlung eines Rohelements 18a des Hausgeräteelements 10a. Durch die Laserbehandlung wird das Rohelement 18a in den Grundkörper 38a des Hausgeräteelements 10a übergeführt. Als Laser wird ein kommerziell erhältlicher Laser der Baureihe "E-Line 20" von ROFIN-SINAR Technologies, Inc. eingesetzt. Bei dem Laser handelt es sich um einen diodengepumpten Festkörperlaser. Der Laser ist ein diodengepumpter Nd:YAG Laser. Der Laser emittiert Laserlicht 20a einer Strahlungswellenlänge von 1064 nm. Der Laser hat eine maximale mittlere Leistung von 10 W. Der Laser wird mittels eines Güteschalters gepulst betrieben. Ein vom Laser emittierter Gauß-Strahl TEM₀₀ weist eine Beugungsmaßzahl M² < 1,3 auf. Der Laser wird mit einer Pulsdauer von 22 ns betrieben. Eine Pulsenergie, d.h. eine pro Puls emittierte elektromagnetische Energie, beträgt 0,75 mJ. Eine Pulsspitzenleistung beträgt 40 kW. Der Laser wird mit einer Pulswiederholfrequenz von 2 kHz betrieben. Ein Laserstrom beträgt 25 A.

Das vom Laser emittierte Laserlicht 20a wird mittels einer nicht dargestellten, jedoch dem Fachmann grundsätzlich bekannten Laseroptikeinheit an einer äußeren Oberfläche 16a des Rohelements 18a mit einer Bestrahlungsstärke von ungefähr 30 GW/cm² fokussiert. Das Laserlicht 20a trifft weitgehend senkrecht auf die äußere Oberfläche 16b. Das Laserlicht 20a wird an der äußeren Oberfläche 16b auf einen Fokusdurchmesser 22a von 13 µm fokussiert. Die Fluenz, d.h. die Energiedeposition pro Puls und Einheitsfläche, beträgt ungefähr 565 J/cm². Die hohe Bestrahlungsstärke in einem Laserfokus 24a während eines Pulses führt zu einem Verdampfen eines Materials des Rohelements 18a. Das Material in einer Umgebung des Laserfokus 24a bleibt aufgrund der dort herrschenden deutlich geringeren Bestrahlungsstärke im Wesentlichen unbeeinflusst. Die Laseroptikeinheit umfasst eine Linse zu einer fünffachen Aufweitung des Laserlichts 20a und eine Konvex-linse mit einer Brennweite von 100 mm, so dass das Laserlicht 20a hinter der Laseroptikeinheit eine Rayleighlänge von 95 µm aufweist. Ferner weist die Laseroptikeinheit zwei Ablenkspiegel auf, welche mittels Galvanometer durch eine CAD-Software gesteuert werden. Der Laserfokus 24a wird relativ zum Rohelement 18a mit einer Geschwindigkeit 26a von 250 mm/s bewegt. Durch die Pulswiederholfrequenz von 2 kHz und die Geschwindigkeit 26a von 250 mm/s ergibt sich der Mittelpunktsabstand 58a zwischen zwei benachbarten Laserbearbeitungspunkten 54a von 125 µm. Wie bereits in Figur 3 angedeutet, wird der Laserfokus 24a in Bearbeitungslinien 28a, 30a über die äußere Oberfläche 16a des Rohelements 18a geführt. Der Linienabstand 32a benachbarter Bearbeitungslinien 28a, 30a beträgt 100 µm.

Durch weitere anschließende Verfahrensschritte, beispielsweise eine Markierung der Heizzonen 42a, 44a, 46a, 48a an der Oberseite 40a des Grundkörpers, kann der Grundkörper 38a in das Hausgeräteelement 10a überführt werden.

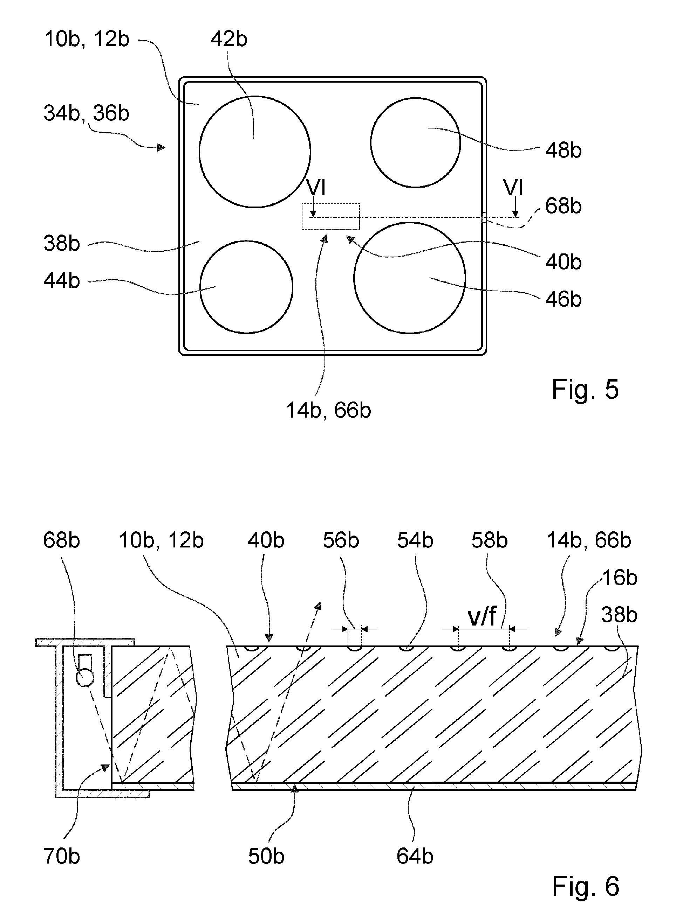

In den Figuren 5 und 6 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 4 verwiesen werden kann. Zur Unterscheidung der Ausführungsbeispiele ist der Buchstabe a in den Bezugszeichen des Ausführungsbeispiels in den Figuren 1 bis 4 durch den Buchstaben b in den Bezugszeichen des Ausführungsbeispiels der Figuren 5 und 6 ersetzt. Bezüglich gleich bezeichneter Bauteile, insbesondere in Bezug auf Bauteile mit gleichen Bezugszeichen, kann grundsätzlich auch auf die Figuren und/oder die Beschreibung des Ausführungsbeispiels der Figuren 1 bis 4 verwiesen werden.

Figur 5 zeigt ein als Kochfeld 36b ausgebildetes Hausgerät 34b mit einem Hausgeräteelement 10b, welches durch ein erfindungsgemäßes Verfahren hergestellt ist, in einer Draufsicht. Das Hausgeräteelement 10b ist als eine Kochfeldplatte 12b ausgebildet. Das Hausgeräteelement 10b weist einen Grundkörper 38b auf. Der Grundkörper 38b ist plattenartig ausgebildet. Der Grundkörper 38b besteht aus einer Glaskeramik. Die Glaskeramik ist unter dem Handelsnamen "Ceran Cleartrans" erhältlich. Der Grundkörper 38b ist transparent. Auf einer Oberseite 40b des Grundkörpers 38b sind in bekannter Weise Heizzonen 42b, 44b, 46b, 48b markiert. Jeder der Heizzonen 42b, 44b, 46b, 48b ist unterhalb der Kochfeldplatte 12b jeweils eine Heizeinheit zugeordnet (nicht dargestellt), welche vorzugsweise jeweils zumindest ein Induktionsheizelement aufweisen. Ferner können auf der Oberseite 40b des Grundkörpers 38b berührungsempfindliche Oberflächen einer Bedieneinheit markiert sein (nicht dargestellt).

Figur 6 zeigt das Hausgeräteelement 10b in einer schematischen und nicht maßstabsgetreuen Schnittdarstellung entlang einer Linie VI-VI in Figur 5. Das Hausgeräteelement 10b weist eine Beschichtung 64b auf, welche an einer der Oberseite 40b gegenüberliegenden Unterseite 50b des Grundkörpers 38b angeordnet ist. Die Beschichtung 64b ist zumindest im Wesentlichen opak ausgebildet und dazu vorgesehen, unter der Kochfeldplatte 12b angeordnete Baueinheiten des Kochfelds 36b, insbesondere die Heizeinheiten, optisch abzuschirmen, so dass diese von der Oberseite 40b des Grundkörpers 38b her nicht mehr einsehbar sind. Vorzugsweise ist die Beschichtung 64b als eine metallische Beschichtung 64b ausgebildet, welcher dem Hausgeräteelement 10b von der Oberseite 40b her betrachtet eine metallische Anmutung verleiht. Das Hausgeräteelement 10b weist eine Markierung 14b auf, die zumindest im Wesentlichen lediglich unter einer Sonderbedingung sichtbar ist. Die Markierung 14b ist an der Oberseite 40b des Grundkörpers 38b eingebracht. Bei der Markierung 14b handelt es sich um einen Markenbezeichnung 66b. Bei der Markenbezeichnung 66b kann es sich beispielsweise um einen Markennamen und/oder ein Markenlogo handeln. Die Markierung 14b ist in einer zur Markierung 14a des Ausführungsbeispiels der Figuren 1 bis 4 identischen Weise aus Laserbearbeitungspunkten 54b gebildet.

Bei der Sonderbedingung, unter welcher die Markierung 14b sichtbar ist, handelt es sich um einen bestimmten Beleuchtungszustand. Die Markierung 14b ist zumindest im Wesentlichen lediglich dann sichtbar, wenn Licht aus dem Grundkörper 38b durch die Oberseite 40b des Grundkörpers 38b nach außen tritt. Das Kochfeld 36b weist hierzu wenigstens eine Beleuchtungseinheit 68b auf. Die Beleuchtungseinheit 68b ist an einer Seitenfläche 70b des Grundkörpers 38b angeordnet. Die Beleuchtungseinheit 68b strahlt in einem Betriebszustand des Kochfelds 36b Licht lateral in den Grundkörper 38b ein, und zwar vorzugsweise derart, dass das Licht wie in Figur 6 schematisch angedeutet durch Reflexionen an der Oberseite 40b und der Unterseite 50b durch den Grundkörper 38b propagiert. Da im Bereich der Markierung 14b die Bedingung einer Totalreflexion nicht mehr erfüllt ist, tritt dort das Licht aus dem Grundkörper 38b aus, wodurch die Markierung 14b sichtbar wird. Das Kochfeld 36b weist somit eine Markierung 14b auf, welche eine Markenbezeichnung 66b beinhaltet und welche lediglich in einem Betriebszustand des Kochfelds 36b sichtbar und insbesondere beleuchtet ist.

**Bezugszeichen**

| | | | |
|---|---|---|---|
| 10 | Hausgeräteelement | 62 | Normalenvektor |
| 12 | Kochfeldplatte | 64 | Beschichtung |
| 14 | Markierung | 66 | Markenbezeichnung |
| 16 | Äußere Oberfläche | 68 | Beleuchtungseinheit |
| 18 | Rohelement | 70 | Seitenfläche |
| 20 | Laserlicht | | |
| 22 | Fokusdurchmesser | | |
| 24 | Laserfokus | | |
| 26 | Geschwindigkeit | | |
| 28 | Bearbeitungslinie | | |
| 30 | Bearbeitungslinie | | |
| 32 | Linienabstand | | |
| 34 | Hausgerät | | |
| 36 | Kochfeld | | |
| 38 | Grundkörper | | |
| 40 | Oberseite | | |
| 42 | Heizzone | | |
| 44 | Heizzone | | |
| 46 | Heizzone | | |
| 48 | Heizzone | | |
| 50 | Unterseite | | |
| 52 | Bauteilkennzeichnung | | |
| 54 | Laserbearbeitungspunkt | | |
| 56 | Durchmesser | | |
| 58 | Mittelpunktsabstand | | |
| 60 | Betrachtungswinkel | | |

## Patentansprüche

1. Verfahren zur Herstellung eines Hausgeräteelements (10a; 10b), insbesondere einer Kochfeldplatte (12a; 12b), **dadurch gekennzeichnet, dass** in einem Verfahrensschritt wenigstens eine optische Markierung (14a; 14b) eingebracht wird, welche wenigstens teilweise zumindest im Wesentlichen lediglich unter einer Sonderbedingung sichtbar ist.

2. Verfahren nach Anspruch 1, **dadurch gekennzeichnet, dass** die Markierung (14a; 14b) an einer äußeren Oberfläche (16a; 16b) eines Rohelements (18a; 18b) des Hausgeräteelements (10a; 10b) erzeugt wird.

3. Verfahren nach Anspruch 1 oder 2, **dadurch gekennzeichnet, dass** die Markierung (14a; 14b) mittels einer Laserbehandlung eingebracht wird.

4. Verfahren nach Anspruch 3, **dadurch gekennzeichnet, dass** Laserlicht (20a; 20b) mit einer Bestrahlungsstärke von zumindest 1 GW/cm² fokussiert wird.

5. Verfahren nach Anspruch 3 oder 4, **dadurch gekennzeichnet, dass** ein gepulster Laser mit einer Pulsdauer von höchstens 50 ns verwendet wird.

6. Verfahren nach einem der Ansprüche 3 bis 5, **dadurch gekennzeichnet, dass** Laserlicht (20a; 20b) auf einen Fokusdurchmesser (22a; 22b) von höchstens 30 µm fokussiert wird.

7. Verfahren nach einem der Ansprüche 3 bis 6, **dadurch gekennzeichnet, dass** ein gepulster Laser mit einer Pulswiederholfrequenz zwischen 0,5 kHz und 20 kHz verwendet wird.

8. Verfahren nach einem der Ansprüche 3 bis 7, **dadurch gekennzeichnet, dass** ein Laserfokus (24a; 24b) relativ zu einem Rohelement (18a; 18b) des Hausgeräteelements (10a; 10b) mit einer Geschwindigkeit (26a; 26b) zwischen 100 mm/s und 400 mm/s bewegt wird.

9. Verfahren nach einem der Ansprüche 3 bis 8, **dadurch gekennzeichnet, dass** ein Laserfokus (24a; 24b) relativ zu einem Rohelement (18a; 18b) des Hausgeräteelements (10a; 10b) in zueinander parallelen Bearbeitungslinien (28a, 30a; 28b; 30b) mit einem Linienabstand (32a; 32b) benachbarter Bearbeitungslinien (28a, 30a; 28b, 30b) zwischen 1 µm und 200 µm bewegt wird.

10. Hausgeräteelement (10a; 10b), insbesondere Kochfeldplatte (12a; 12b), welches insbesondere durch ein Verfahren nach einem der vorhergehenden Ansprüche hergestellt ist und welches wenigstens eine Markierung (14a; 14b) umfasst, die wenigstens teilweise zumindest im Wesentlichen lediglich unter einer Sonderbedingung sichtbar ist.

11. Hausgerät (34a; 34b), insbesondere Kochfeld (36a; 36b), mit einem Hausgeräteelement (10a; 10b) nach Anspruch 10.
